# EUROPEAN PATENT SPECIFICATION

(11) **EP 1 817 211 B1**
(45) Date of publication and mention of the grant of the patent: **05.08.2009**
(21) Application number: 04822439.8
(22) Date of filing: 23.11.2004
(51) Int. Cl.: B60R 21/20

(54) **SEPARATE REACTION SURFACE FOR VEHICLE TRIM PANEL**
GETRENNTE REAKTIONSFLÄCHE FÜR FAHRZEUGVERKLEIDUNGSPLATTE
SURFACE DE REACTION SEPAREE POUR UN PANNEAU DE GARNISSAGE DE VEHICULE

(43) Date of publication of application: 15.08.2007
(73) Proprietor: Johnson Controls Technology Company, Holland, MI 49423 (US)
(72) Inventor: SPAHR, Timothy, James, Zeeland, MI 49464 (US); STUMP, Jeff, West Olive, MI 49460 (US); AVILA, Javier, Holland, MI 49424 (US); HEMMEKE, Ronald, Holland, MI 49423 (US); ARDIGO, Frank, St. Clair, MI 48079 (US)
(74) Representative: Wolff, Felix
(86) International application number: PCT/US2004/039198
(87) International publication number: WO 2006/057632

(56) References cited:
- EP-A- 1 393 994
- EP-A- 1 428 730
- DE-A1- 4 441 365
- FR-A- 2 842 472
- US-A1- 2003 085 555

## Description

### FIELD OF THE INVENTION

The present invention relates generally to the field of vehicle occupant protection systems and more particularly, to inflatable restraint systems. In particular, the present invention relates to inflatable restraint systems wherein an airbag assembly is positioned behind a trim panel and the trim panel is designed to deploy in response to a force provided by the inflating airbag.

### BACKGROUND OF THE INVENTION

Inflatable restraint systems for use in vehicles such as cars, vans, SUVs, light trucks, and the like, are generally known in the art. In most systems, an inflatable airbag is provided which is configured to deploy into the occupant compartment of a vehicle upon the occurrence of an event calling deployment, such as a collision, detected by a sensor. The deployment of the airbag is generally initiated by a rapid blast of gas coming from an igniter coupled to the sensor. Typically, the airbag is deployed from a receptacle that is positioned behind a vehicle trim panel such as an instrument panel, steeping wheel, headliner, door panel, and the like.

A variety of configurations are known for enabling an inflating airbag to expand into the occupant compartment of a vehicle and protect an occupant against injury resulting from the collision, or other event calling for the deployment of the airbag. For example, it is generally known to position an airbag containing canister behind a weakened area in the trim panel. In such a system, the inflating airbag is designed to break through the weakened portion of the trim panel and expand outwardly into the occupant compartment of the vehicle. Such systems are especially known from DE 1 428 730 A which shows the features of the preamble of claim 1; DE 1 393 994 A and FR 2 842 472 A.

Another configuration that is commonly known is to integrally form a deployment door into the trim panel and to position the airbag containing canister behind the deployment door. The deployment door is moveably coupled to the trim panel and in the event of deployment, the inflating airbag forces the deployment door open. The airbag expands outwardly through the deployment door opening and into the occupant compartment of the vehicle.

It is further known to provide an entire trim panel that is deployable, rather then just a door within the trim panel. For such a configuration, an inflating airbag forces the entire trim panel to move, usually relative to a support structure, thereby enabling the airbag to expand outwardly into the occupant compartment.

Regardless of the type of configuration used, the need to control (e.g. guide, predict, etc.) how trim panel opens or moves in order to allow the inflating airbag to outwardly extend into the occupant compartment is particularly important. It is conventionally known to design the trim panel in a manner to sufficiently allow the airbag to extend into the occupant compartment. Such trim panels are generally designed as a composite member having a layer configured to receive the impact of the airbag, a second layer that provides a cushioned surface to protect the occupant and portions of the vehicle, and a third layer applied for aesthetic purposes. The cost and complexity of manufacturing such a trim panel is relatively high and often heavy because of the multiple layers.

Accordingly, it would be advantageous to provide an inflatable restraint system having a deployable trim panel that may simplify the manufacturing process of the trim panel. It would further be advantageous to provide a deployable trim panel that may reduce the number of layers required for its composition. It would also be advantageous to provide a deployable trim panel wherein a separate reaction surface is mounted to the trim panel rather than being integrated with the trim panel. It would further be advantageous to provide a deployable trim panel having reduced weight compared to conventionally known trim panels. It would further be advantageous to provide a deployable instrument panel that reduces the likelihood that the windshield of the vehicle will be broken when the airbag is deployed. It would further be advantageous to provide an inflatable restraint system that may allow an inflating airbag to engage a trim panel configured to be deployment (or a component coupled thereto) at a relatively early stage of inflation. The teachings hereinbelow extend to those embodiments which fall within the scope of the appended claims, regardless of whether they accomplish one or more of the above-mentioned needs.

### SUMMARY OF THE INVENTION

According to one embodiment, an inflatable restraint system for use in a vehicle having an occupant compartment includes a support structure, a uniform trim panel movably coupled relative to the support structure and having a first surface and a second surface, a separate reaction surface coupled to the second surface of the uniform trim panel, and an airbag deployment device having an open end aligned with the separate reaction surface. The uniform trim panel is adapted to move between a stowed position and a deployed position. The separate reaction surface is configured to receive a force from an inflating airbag so that the uniform trim panel moves in a manner that permits the inflating airbag to outwardly expand into the occupant compartment.

A method of manufacturing a deployable instrument panel for use with an inflatable restraint system includes the steps of forming a uniform instrument panel that is configured to deploy in the event of an airbag deployment event, and mounting a separate reaction surface to the inner surface of the instrument panel. The separate reaction surface is configured to receive the force of an inflating airbag. The instrument panel is an integrally molded one piece substrate layer having an inner surface and an outer surface. The separate reaction surface is configured to distribute the force of an inflating airbag and allow the instrument panel to deploy.

### BRIEF DESCRIPTION OF THE DRAWINGS

FIGURE 1 is a perspective view of a passenger compartment of a vehicle including an inflatable restraint system illustrated in a stowed position according to an exemplary embodiment.

FIGURE 2 is a perspective view of the inflatable restraint system of FIGURE 1, shown in a deployed position.

FIGURE 3 is a section view taken along the line 3-3 of FIGURE 1, showing an inflatable restraint system according to one exemplary embodiment wherein a separate reaction surface is mounted to a trim panel having a plurality of layers.

FIGURE 4 is a section view taken along the line 3-3 of FIGURE 1, showing an inflatable restraint system according to another exemplary embodiment wherein a separate reaction surface is mounted to a trim panel having a single layer.

### DETAILED DESCRIPTION OF THE PREFERRED EMBODIMENTS

Proceeding now to the description of the preferred and other exemplary embodiments, the FIGURES illustrate an inflatable restraint system 10 of the type which would be used with a car. In alternative embodiments, inflatable restraint system 10 could be configured to be used with cars, SUVs, vans, trucks, etc. (i.e. any vehicle wherein it would be desirable to conceal an airbag deployment device behind a trim cover of the vehicle). In the FIGURES, the inflatable restraint system 10 is shown to include a support structure 12, an airbag deployment device 30, a trim panel 60 (e.g., platform, deployable panel cover, member, etc.), and a separate reaction surface 80. Support structure 12, airbag deployment device 30, trim panel 60, and separate reaction surface 80 cooperate to provide a inflatable restraint system configured to protect a vehicle occupant upon the occurrence of an event calling for the deployment of an airbag (not shown).

As illustrated in the FIGURES, inflatable restraint system 10.is shown as a system configured to protect a front seat passenger-side occupant from striking an instrument panel upon the occurrence of an event calling for the deployment of an airbag. In alterative embodiments, inflatable restraint system 10 may be configured to protect a driver seat occupant as well as the passenger seat occupant. As can be appreciated, inflatable restraint system 10 may be selectively configured to protect vehicle occupants located throughout the vehicle, and is not limited to front seat passengers and instrument panels.

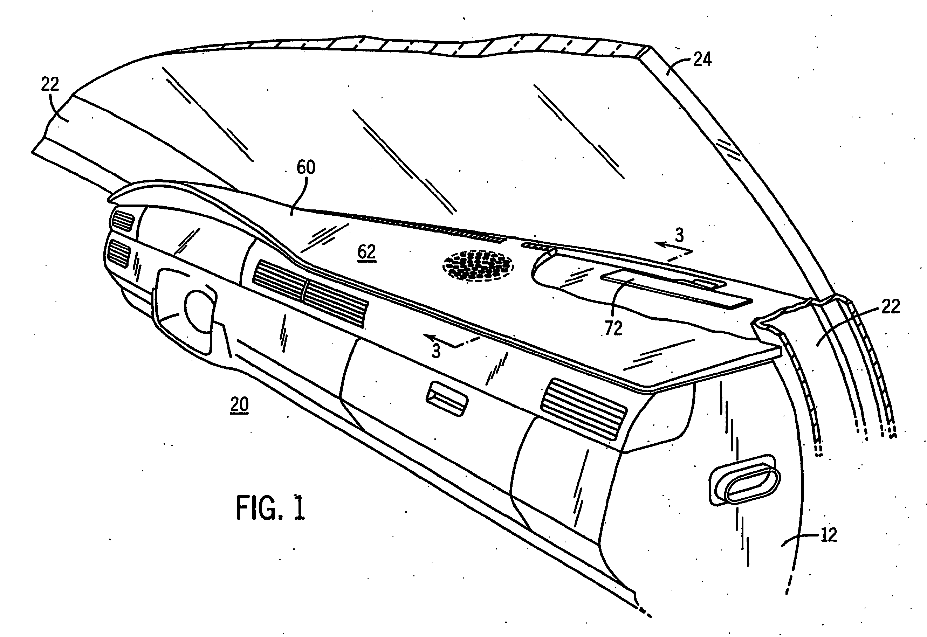

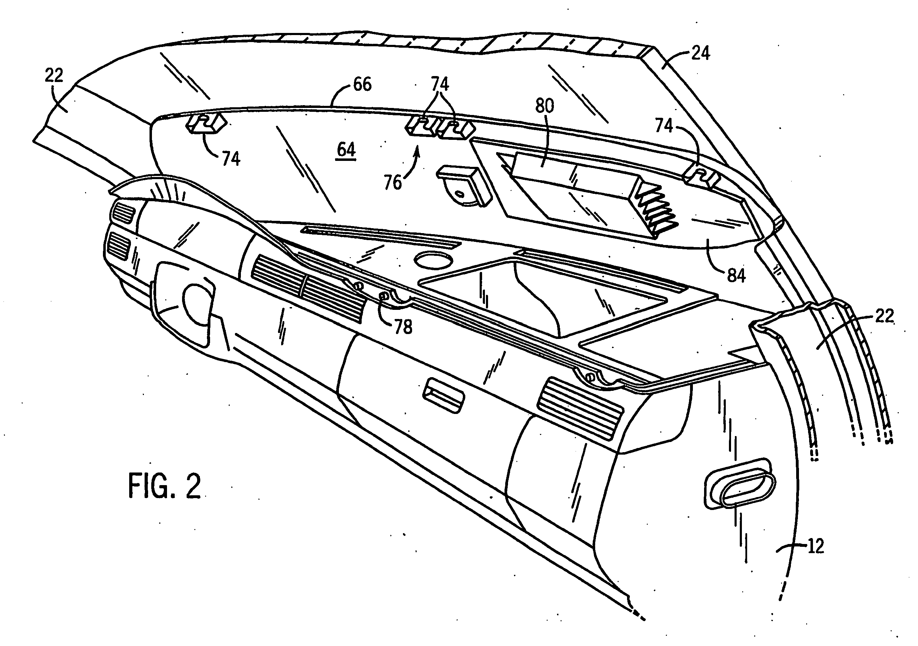

Referring to FIGURES 1 and 2, support structure 12 is designed to support trim panel 60 and may partially conceal airbag deployment device 30. Support structure 12 may be in the form of an any vehicle support structure that is covered by a trim panel and may provide structural and/or aesthetic features. In a particularly preferred form support structure 12 is an instrument panel structure defining the front portion of a vehicle occupant compartment 20. According to an exemplary embodiment, support structure 12 extends laterally (i.e. transversely, side-to-side, etc.) between pillars 22, and in a fore and aft direction (i.e. longitudinally, front-to-rear, etc.) between a windshield 24 and the occupant compartment 20. In an alternative embodiment, support structure 12 may not extend entirely between the pillars and instead may only partially define the front portion of the vehicle occupant compartment (e.g. a vehicle having a divided instrument panel, a cargo vehicle wherein the passenger side of the vehicle is intended for storage, etc.).

According to a preferred embodiment, support structure 12 is configured to support a variety of components such as HVAC systems, audio and video systems, vehicle controls (e.g. ignition, engine, transmission, steering), gages, navigational systems, etc. Support structure 12 may further support a variety of storage compartments (e.g. map pockets, beverage receptacles, glove boxes, console systems, etc.). In alternative embodiments, support structure 12 may only be configured to support trim panel 60.

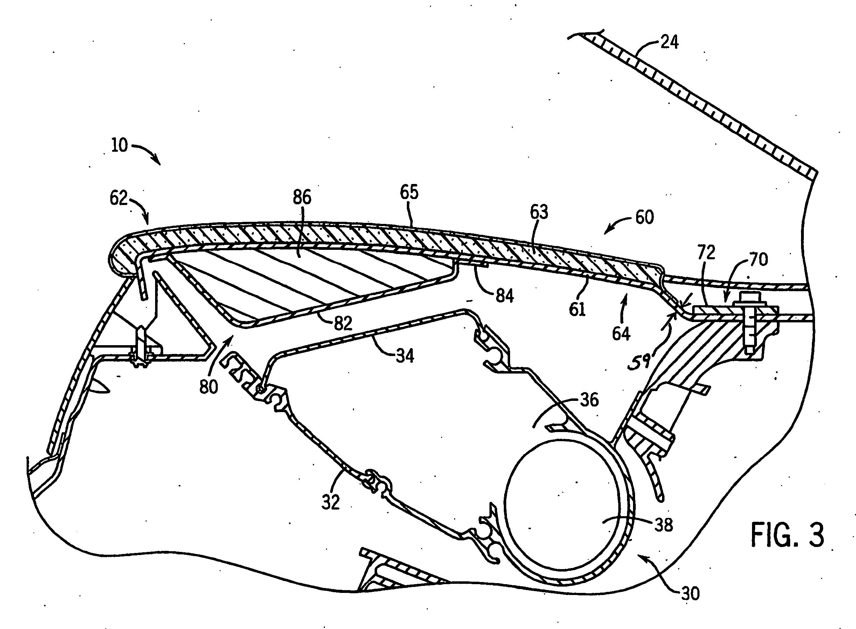

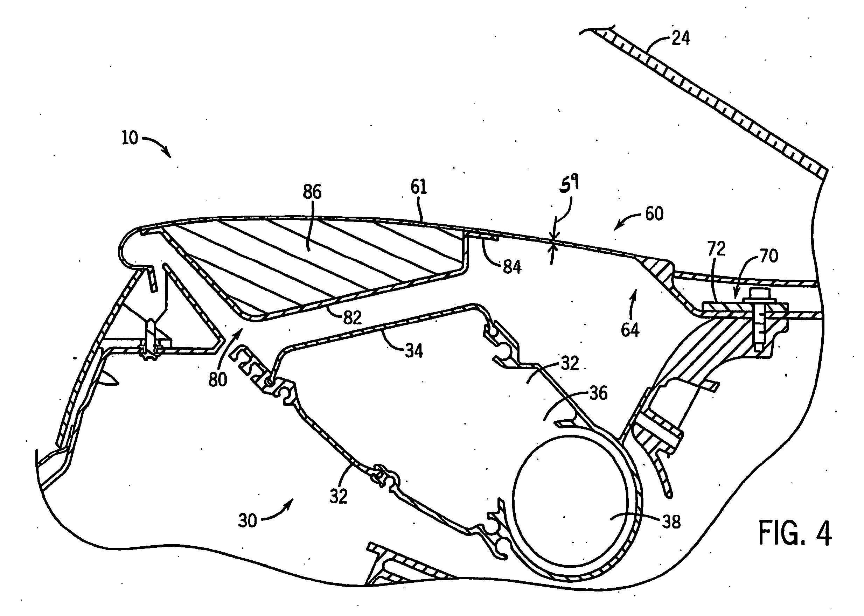

Referring to FIGURES 3 and 4, airbag deployment device 30 is positioned behind or within support structure 12 and concealed by trim panel 60. Airbag deployment device 30 provides a system intended to protect vehicle occupant in the event of a collision or the like. As more clearly shown in FIGURES 3 and 4, airbag deployment device 30 is coupled to the vehicle, and according to a preferred embodiment is coupled to support structure 12. Airbag deployment device may be positioned generally in front of the front passenger seat to provide protection to the front passenger seat occupant, or may be positioned anywhere throughout the vehicle. Airbag deployment devices themselves are very well known and accordingly, specific details of the airbag deployment device will not be included herein. Airbag deployment device 30 may be any of a variety of conventionally known or suitable airbag deployment devices.

Generally, airbag deployment device 30 includes a housing (e.g. canister, module, etc.) shown as a receptacle 32. Receptacle 32 has an open first end 34 and a closed second end 36. An airbag (not shown) is stowed in receptacle 32 and may be positioned near the closed second end 36 in a generally folded configuration (i.e. storage position, pre-inflated position, etc.). The airbag is configured to inflate upon the occurrence of a deployment event detected by a sensor. Upon inflation, the airbag expands outwardly through the open first end 34 and subsequently into the occupant compartment of the vehicle.

Referring to FIGURE 1 and according to a preferred embodiment, trim panel 60 at least partially covers support structure 12 and conceals airbag deployment device 30. Trim panel 60 is a uniform trim panel that is movable relative to support structure 12 to allow the airbag to expand into the occupant compartment of the vehicle. As used herein when referring to the trim panel, the term "uniform" is intended to mean a trim panel that does not include a deployment door that is moveable (e.g. separable, bendable, etc.) from the trim panel under the force of airbag inflation, and/or a predetermined weakened area intended open (e.g. split, tear, etc.) under the force of airbag inflation. The use of the term uniform is not intended to exclude from the scope of the present invention trim panels having openings or other missing portions for components such as audio speakers, air vents, and the like. Further, the term uniform, as used herein, is not being used to define a profile or shape of a trim panel. Finally, the use of the term uniform is not being used to describe the composition (e.g., material or materials used in making the trim panel) of the trim panel, which may vary throughout the trim panel.

In a preferred form, trim panel 60 is an active upper (i.e., a deployable trim panel for an instrument panel) used to cover at least a portion of an instrument panel support structure. In a particularly preferred embodiment, trim panel 60 covers the entire support structure 12 extending laterally between pillars 22. Trim panel 60 includes a first surface (e.g. exposed surface, A-surface, interior surface, etc.) shown as front surface 62 and a second surface (e.g., hidden surface, back side, concealed surface, etc.) shown as back surface 64. Trim panel 60 is positioned adjacent to support structure 12 and is movably coupled relative to support structure 12. According to an exemplary embodiment, trim panel 60 is movable between a first position (i.e. retracted position, stowed position, etc.), as shown in FIGURE 1, and a second position (i.e. deployed position, active position, released position, etc.), as shown in FIGURE 2.

According to a preferred embodiment, trim panel 60 is moveably coupled to support structure 12. According to a particularly preferred embodiment, trim panel 60 is pivotally coupled to support structure 12 by a hinge 70 located near windshield 24. According to an exemplary embodiment, hinge 70 includes a hinge plate 72 (shown in FIGURES 1, 3, and 4) to reinforce the trim panel 60 from the force generated by the airbag upon inflation. Hinge plate 72 is made of a rigid material such as steel, but may alternatively be made of any of a variety of conventionally known rigid materials. According to another embodiment (not shown), trim panel 60 is pivotally coupled to support structure 12 by a hinge 70, but hinge plate 72 is eliminated. Hinge plate 72 can be eliminated from trim panel 60 by fabricating trim panel 60 from a material having increased strength over conventionally used materials. For example, molding trim panel 60 from a material such as, but not limited to, Lexan EXL 1330 may eliminate the need for steel hinge plate 72. According to still another embodiment, trim panel 60 is detachably coupled to support structure 12.

Referring to FIGURE 2, trim panel 60 is at least partially maintained in the first position by a detachable fastener provided between trim panel 60 and support structure 12. As illustrated in FIGURE 2, a plurality of detachable fasteners 74 may be provided to releasably engage trim panel 60 with support structure 12. According to a preferred embodiment, detachable fastener 74 is in the form of a clip having a female component 76 and a corresponding male component 78. Female component 76 is coupled to one of trim panel 60 and support panel 12, while male component 78 is coupled to the other of trim panel 60 and support panel 12. In a particularly preferred form, the detachable fastener 74 is a clip sometimes referred to as a "Casper" clip wherein the female component 76 frictionally engages male component 78. Upon the occurrence of a deployment event, the frictional engagement between female component 76 and male component 78 is configured to release when a force generated by inflating the airbag is transferred to trim panel 60. As can be appreciated, any of a variety of conventionally known detachable fasteners may be used to detachably couple trim panel 60 to support structure 12.

Referring to FIGURE 3, trim panel 60 is shown as a panel comprised of a plurality of layers or portions. In this manner, trim panel 60 may include various known laminate or composite layers provided in an overlapping or stacked arrangement. For example, trim panel 60 is shown as having an inner structural layer (shown as substrate layer 61), a intermediate padded and/or cushioned material (shown as padded layer 63), and an outer aesthetic and/or softness layer (shown as skin layer 65). A large number of different trim panel constructions are known in the art, and the present invention is equally suitable for use with any such configuration. For example, skin layer 65 and padded layer 63 may be integrally molded or otherwise fused together as a single layer. In other embodiments, all of the layers may be integrally formed using any of a variety of generally known molding or other manufacturing techniques.

Referring to FIGURE 4, trim panel 60 is shown according to another suitable embodiment. Trim panel 60 is shown as being formed of a single layer of material. According to an exemplary embodiment, trim panel 60 is formed of only a substrate layer 61. Substrate layer 61 defines both the exposed surface 62 (i.e., A-surface) and the concealed surface 64. The overall weight of trim panel 60 can be advantageously reduced by eliminating padded layer 63 and skin layer 65. While not intending to be limited to any particular theory, reducing the weight of trim panel 60 may allow a manufacturer to use a less powerful airbag deployment device to deploy the panel, and/or may allow the trim panel be deployed at a slower velocity than a conventional deployable instrument panel. In addition, providing a relatively light-weight trim panel 60 may reduce the likelihood of damage to vehicle (e.g., windshield, etc.) in the event of a deployment.

Referring to both FIGURES 3 and 4, substrate layer 61 is shown as having a substantially uniform thickness 59 (e.g., wall thickness, etc.). Substrate layer 61 may be made of a variety of materials using a variety of techniques. According to an exemplary embodiment, substrate layer 61 is a molded article formed by a suitable molding process (e.g., compression molding, etc.). Unlike known deployable instrument panels, substrate layer 61 does not directly receive the impact from an expanding airbag. Instead, a reaction surface 80 is provided to receive the impact from the expanding airbag and transfer the force to trim panel 60. Such a configuration allows the inflating airbag to indirectly engage substrate layer 61 at a relatively early stage of inflation.

As best shown in FIGURES 3 and 4, reaction surface 80 is disposed between trim panel 60 and open end 34 of receptacle 32. Reaction surface 80 is a separate surface that, according to a preferred embodiment, is coupled to concealed surface 64 of trim panel 60. As used herein when referring to reaction surface 80, the term "separate" is intended to mean a surface that is not integrally formed with the trim panel as a single unitary body, but rather is mounted to the trim panel. By configuring reaction surface 80 as a separate member, rather than integrating it into the substrate layer, substrate layer 61 may now become the exposed surface which may result in reduced cost, mass, and manufacturing complexity.

Reaction surface 80 is configured to receive the force of the airbag when the airbag inflates and expands outwardly from canister 32. Reaction surface 80 is designed to distribute the force from expanding the airbag across trim panel 60 in a manner sufficient to predictably move the entire trim panel 60 into the open position. The use of a separate reaction surface with a deployable trim panel is intended to simplify the design of the trim panel by enabling the trim panel to be formed as a uniform substrate layer if desired.

Reaction surface 80 generally includes an impact surface 82 configured to receive the force of the airbag and a flange 84 used to couple reaction surface 80 to concealed surface 64. Impact surface 82 is shaped to receive and distribute the force of the airbag and may be angled or have a curvilinear portion to properly transfer the force to trim panel 60. According to a preferred embodiment, impact surface 82 is positioned in such a manner that an inflating airbag will engage impact surface 82 at a relatively early stage of deployment. For example, as shown in FIGURES 3 and 4, impact surface 82 is lowered from back surface 64 of trim panel 60 and is positioned near open end 34 of canister 32. An inflating airbag will engage impact surface 82 shortly after exiting open end 34. If separate reaction surface 80 was not included, an inflating airbag would not engage the system until striking bottom surface 64 of trim panel 60. Having the airbag engage impact surface 82 at an early stage of deployment allows further control of the deployment forces being transferred to trim panel 60.

Referring to FIGURES 2 through 4, flange 84 is a peripheral border sized sufficiently to allow reaction surface 80 to be mounted to trim panel 60. Flange 84 may be a continuous member or may be disposed intermittently depending on how the reaction surface is mounted to trim panel 60. According to a preferred embodiment, reaction surface 80 is welded to trim panel 60 along flange 84, such as by vibration welding. As can be appreciated, reaction surface 84 may be mounted to trim panel 60 using a variety of fastening techniques including, but limited to, mechanical fasteners (e.g., clips, bolts, screws, etc.), heat staking, adhesives, etc.

When coupled to trim panel 60, reaction surface 80 and concealed surface 64 may define a cavity 86. Cavity 86 may be filled with a material, such as a foam filler, or alternatively may be left as an empty cavity. A foam filler may be used to help absorb and transfer the force resulting from the impact of the airbag. According to an exemplary embodiment, separate reaction surface 80 may further include support members intended to provide rigidity, such as stiffing ribs 86 (shown in FIGURE 2). Ribs 86 may be positioned parallel with trim panel 60 and may assist in transferring the force received from the airbag to trim panel 60.

With regard to the material of the separate reaction surface 80, plastic is preferred, especially polyproplene, polyethylenes, and the like. However, are one skilled in the art has read the specification and understands its possibilities, those skilled in the art could select a variety of other materials.

In operation, the inflatable restraint system 10 is configured as an instrument panel positioned at the front portion of a vehicle occupant compartment. The inflatable restrain system 10 is intended to prevent a front seat passenger from being propelled forward and striking the instrument panel upon the occurrence of an event detect by a sensor calling for the deployment of the airbag.

In the event of a collision, for example a front end collision, a sensor sends a signal to airbag deployment device 30 indicating that the airbag should be deployed. Generally, a rapid blast of gas coming from an igniter 38 coupled to the sensor initiates the deployment of the airbag. As illustrated in FIGURES 3 and 4, the airbag is maintained in canister 32 when in the stowed position. The initial deployment of the airbag will cause the airbag to extend outwardly from canister 32 and engage the separate reaction surface 80 (particularly impact surface 84) coupled to concealed surface 64 and positioned adjacent to open end 34 of canister 32. When the airbag strikes reaction surface 80, reaction surface 80 transfers the force in a predictable manner across trim panel 60 to upwardly move trim panel 60 relative to support structure 12. Unlike other inflatable restraint systems wherein only a deployment door moves, the entire trim panel 60 is configured to deploy and allow the airbag to expand outwardly into the occupant compartment of the vehicle.

A method of manufacturing trim panel 60 for use with inflatable restraint system 10 is provided herein, The method includes the steps of forming trim panel 60 as a uniform trim panel configured to be mounted to support structure 12. Trim panel 60 is preferably formed by compression molding. According to a preferred embodiment, trim panel 60 is formed as a single substrate layer that defines exposed surface 62 and concealed surface 64. forming trim panel 60 as a single layer eliminates the additional steps of providing a padded foam layer and an outer skin layer. As a single substrate layer, trim panel 60 may be made of a variety of materials such as a polycarbonate, a compression molded natural fiber material, or a compression molded glass fiber material: According to an alternative embodiment, trim panel 60 may include a padded foam layer and an outer skin layer. The method further includes the step of mounting separate reaction surface 80 to concealed surface 64 of trim panel 60. By not integrating the reaction surface and the substrate layer, substrate layer 61 may become the exposed surface which may result in reduced cost, mass, and manufacturing complexity. Reaction surface 80 may be mounted to trim panel 60 by vibration welding, heat staking, or by the use of mechanical fasteners.

It is also important to note that the construction and arrangement of the elements of the inflatable restrain system and the separate reaction surface as shown in the preferred and other exemplary embodiments is illustrative only. Although only a few embodiments of the present inventions have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces (e.g. tabs, fingers, apertures, etc.) may be reversed or otherwise varied, or the length or width of the structures and/or members or connectors or other elements of the system may be varied. It should be noted that the elements and/or assembles of the system may be constructed from any of a wide variety of materials that provide sufficient strength or durability, in any of a wide variety of colors, textures and combinations. It should also be noted that the closure may be configured in a suitable shape (e.g. rectangular, triangular, oval, etc.) and used in association with a wide variety of other containers and in any of a wide variety of other applications. Accordingly, all such modifications are intended to be included within the scope of the present inventions. Other substitutions, modifications, changes and omissions may be made in the design, operating conditions and arrangement of the preferred and other exemplary embodiments without departing from the spirit of the present inventions.

The order or sequence of any process or method steps may be varied or re-sequenced according to alternative embodiments. Other substitutions, modifications, changes and omissions may be made in the design, operating configuration and arrangement of the preferred and other exemplary embodiments without departing from the scope of the inventions as defined in the appended claims.

## Claims

1. An inflatable restraint system (10) for use with a vehicle having an occupant compartment, the inflatable restraint system (10) comprising:
a support structure (12);
a trim panel (60) movably coupled relative to the support structure and having, a first surface and a second surface, and is adapted to move between a stowed position and a deployed position;
a separate reaction surface (80) coupled to the second surface of the trim panel (60);
an airbag deployment device (30) having an open end aligned with the separate reaction surface (80);
wherein the separate reaction surface (80) is configured to receive a force from an inflating airbag so that the trim panel (60) moves to the deployed position which permits the inflating airbag to outwardly expand into the occupant compartment, **characterized in that** the trim panel is a uniform trim panel (60) extending laterally between a driver side and a passenger side of the occupant compartment.

2. The inflatable restraint system (10) of Claim 1, wherein the uniform trim panel (60) comprises an integrally molded one piece member.

3. The inflatable restraint system (10) of Claim 2, wherein the first surface is an outer surface and the second surface is an inner surface.

4. The inflatable restraint system (10) of Claim 3, wherein a skin is wrapped around the outer surface of the uniform trim panel (60) to provide a surface that is exposed to the occupant compartment.

5. The inflatable restraint system (10) of Claim 4, wherein a padded layer is disposed between the uniform trim panel (60) and the skin.

6. The inflatable restraint system (10) of Claim 2, wherein the uniform trim panel (60) is fabricated from a polycarbonate.

7. The inflatable restraint system (10) of Claim 1, wherein the support structure is an instrument panel structure and the uniform trim panel (60) is a deployable instrument panel cover.

8. The inflatable restrain System of Claim 7, wherein the deployable instrument panel cover is rotatable about a hinge point located at a forward portion of the instrument panel structure.

9. The inflatable restraint system (10) of Claim 1, wherein the separate reaction surface (80) includes a flange for mounting the separate reaction surface (80) to the second surface.

10. The inflatable restraint system (10) of Claim 9, wherein the separate reaction surface (80) is coupled to the second surface by vibration welding.

11. The inflatable restraint system (10) of Claim 1 further comprising a detachable fastener for releasably securing the trim panel (60) to the support structure.

12. The inflatable restraint system (10) of Claim 9, wherein the detachable fastener is provided between the support structure and the trim panel (60).

13. The inflatable restraint system (10) of Claim 9, wherein the detachable fastener is provided between the support structure and the separate reaction surface (80).

14. The inflatable restraint system (10) of Claim 1, wherein the separate reaction surface (80) includes support ribs for increasing the rigidity of the separate reaction portion.

15. The inflatable restraint system (10) of Claim 1, wherein the separate reaction surface (80) and the second surface of the trim panel (60) define a cavity.

16. The inflatable restraint system (10) of Claim 15, wherein the cavity is filled with a filler material.

17. The inflatable restraint system (10) of Claim 1, wherein the separate reaction surface (80) is positioned to receive the inflating airbag at a relatively early stage of deployment.

18. The inflatable restraint system (10) of Claim 1, wherein the uniform trim panel (60) has a substantially constant thickness.

19. A method of manufacturing a deployable instrument panel for use with an inflatable restraint system (10), the method comprising:
forming a uniform instrument panel that is configured to extend laterally across a driver side and a passenger side of an occupant compartment and to deploy in the event of an airbag deployment event, the instrument panel is an integrally molded one piece substrate layer having an inner surface and an outer surface; and
mounting a separate reaction surface (80) to the inner surface of the uniform instrument panel, the separate reaction surface (80) is configured to receive the force of an inflating airbag,
wherein the separate reaction surface (80) is configured to distribute the force of an inflating airbag arid allow the uniform instrument panel to deploy.

20. The method of Claim 19, further comprising the step of wrapping a skin around the outer surface of uniform instrument panel to provide an exposed surface.

21. The method Claim 20, further comprising the step of providing a padded layer between the outer surface of the uniform instrument panel and the skin.

## Patentansprüche

1. Aufblasbares Rückhaltesystem (10) für die Verwendung in einem Fahrzeug mit einer Fahrgastzelle,
wobei das aufblasbare Rückhaltesystem (10) Folgendes umfasst:
eine Stützstruktur (12),
eine Verkleidungsplatte (60), die bezüglich der Stützstruktur beweglich gekoppelt ist, eine erste Fläche und eine zweite Fläche hat und geeignet ist, sich zwischen einer verstauten Position und einer ausgefahrenen Position zu bewegen,
eine getrennte Reaktionsfläche (80), die an die zweite Fläche der Verkleidungsplatte (60) gekoppelt ist,
eine Airbag-Entfaltungsvorrichtung (30), deren offenes Ende auf die getrennte Reaktionsfläche (80) ausgerichtet ist,
wobei die getrennte Reaktionsfläche (80) so konfiguriert ist, dass sie eine Kraft von einem sich aufblasenden Airbag aufnimmt, so dass sich die Verkleidungsplatte (60) zur ausgefahrenen Position bewegt, wodurch sich der sich aufblasende Airbag nach außen in die Fahrgastzelle ausdehnen kann, **dadurch gekennzeichnet, dass** es sich bei der Verkleidungsplatte um eine gleichförmige Verkleidungsplatte (60) handelt, die sich seitlich zwischen einer Fahrerseite und einer Fahrgastseite der Fahrgastzelle erstreckt.

2. Aufblasbares Rückhaltesystem (10) nach Anspruch 1, wobei die gleichförmige Verkleidungsplatte (60) ein angeformtes einteiliges Element umfasst.

3. Aufblasbares Rückhaltesystem (10) nach Anspruch 2, wobei die erste Fläche eine äußere Fläche und die zweite Fläche eine innere Fläche ist.

4. Aufblasbares Rückhaltesystem (10) nach Anspruch 3, wobei eine Haut um die äußere Fläche der gleichförmigen Verkleidungsplatte (60) gewickelt ist, um eine gegenüber der Fahrgastzelle freiliegende Oberfläche bereitzustellen.

5. Aufblasbares Rückhaltesystem (10) nach Anspruch 4, wobei eine gepolsterte Schicht zwischen der gleichförmigen Verkleidungsplatte (60) und der Haut angeordnet ist.

6. Aufblasbares Rückhaltesystem (10) nach Anspruch 2, wobei die gleichförmige Verkleidungsplatte (60) aus einem Polycarbonat hergestellt ist.

7. Aufblasbares Rückhaltesystem (10) nach Anspruch 1, wobei es sich bei der Stützstruktur um eine Instrumententafelstruktur und bei der gleichförmigen Verkleidungsplatte (60) um eine ausfahrbare Instrumententafelabdeckung handelt.

8. Aufblasbares Rückhaltesystem nach Anspruch 7, wobei die ausfahrbare Instrumententafelabdeckung um einen Scharnierpunkt gedreht werden kann, der sich an einem vorwärtigen Abschnitt der Instrumententafelstruktur befindet.

9. Aufblasbares Rückhaltesystem (10) nach Anspruch 1, wobei die getrennte Reaktionsfläche (80) einen Flansch zur Montage der getrennten Reaktionsfläche (80) an der zweiten Fläche aufweist.

10. Aufblasbares Rückhaltesystem (10) nach Anspruch 9, wobei die getrennte Reaktionsfläche (80) mittels Vibrationsschweißen an die zweite Fläche gekoppelt ist.

11. Aufblasbares Rückhaltesystem (10) nach Anspruch 1, ferner mit einer ablösbaren Befestigungsvorrichtung zur lösbaren Befestigung der Verkleidungsplatte (60) an der Stützstruktur.

12. Aufblasbares Rückhaltesystem (10) nach Anspruch 9, wobei die ablösbare Befestigungsvorrichtung zwischen der Stützstruktur und der Verkleidungsplatte (60) vorgesehen ist.

13. Aufblasbares Rückhaltesystem (10) nach Anspruch 9, wobei die ablösbare Befestigungsvorrichtung zwischen der Stützstruktur und der getrennten Reaktionsfläche (80) vorgesehen ist.

14. Aufblasbares Rückhaltesystem (10) nach Anspruch 1, wobei die getrennte Reaktionsfläche (80) Stützrippen zur Erhöhung der Steifheit des getrennten Reaktionsabschnitts aufweist.

15. Aufblasbares Rückhaltesystem (10) nach Anspruch 1, wobei die getrennte Reaktionsfläche (80) und die zweite Fläche der Verkleidungsplatte (60) einen Hohlraum definieren.

16. Aufblasbares Rückhaltesystem (10) nach Anspruch 15, wobei der Hohlraum mit einem Füllmaterial gefüllt ist.

17. Aufblasbares Rückhaltesystem (10) nach Anspruch 1, wobei die getrennte Reaktionsfläche (80) so positioniert ist, dass sie den sich aufblasenden Airbag in einem relativ frühen Stadium des Entfaltens aufnimmt.

18. Aufblasbares Rückhaltesystem (10) nach Anspruch 1, wobei die gleichförmige Verkleidungsplatte (60) eine im Wesentlichen konstante Dicke hat.

19. Verfahren zur Herstellung einer ausfahrbaren Instrumententafel für die Verwendung mit einem aufblasbaren Rückhaltesystem (10) mit folgenden Schritten:
Bilden einer gleichförmigen Instrumententafel, die so konfiguriert ist, dass sie sich seitlich über eine Fahrerseite und eine Fahrgastseite einer Fahrgastzelle erstreckt und beim Entfalten eines Airbags ausfährt, wobei es sich bei der Instrumententafel um eine angeformte einteilige Substratschicht mit einer inneren Fläche und einer äußeren Fläche handelt, und
Montieren einer getrennten Reaktionsfläche (80) an die innere Fläche der gleichförmigen Instrumententafel, wobei die getrennte Reaktionsfläche (80) so konfiguriert ist, dass sie die Kraft eines sich aufblasenden Airbags aufnimmt,
wobei die getrennte Reaktionsfläche (80) so konfiguriert ist, dass sie die Kraft eines sich aufblasenden Airbags verteilt und das Ausfahren der Instrumententafel gestattet.

20. Verfahren nach Anspruch 19, ferner mit dem Schritt des Umwickelns der äußeren Fläche der gleichförmigen Instrumententafel mit einer Haut zur Bereitstellung einer freiliegenden Fläche.

21. Verfahren nach Anspruch 20, ferner mit dem Schritt des Bereitstellens einer gepolsterten Schicht zwischen der äußeren Fläche der gleichförmigen Instrumententafel und der Haut.

## Revendications

1. Système de retenue gonflable (10) à utiliser avec un véhicule comprenant un habitacle, le système de retenue gonflable (10) comprenant:
une structure de support (12);
un panneau de garnissage (60) couplé de façon mobile par rapport à la structure de support et présentant une première surface et une seconde surface et adapté pour se déplacer entre une position rangée et une position déployée;
une surface de réaction séparée (80) couplée à la seconde surface du panneau de garnissage (60);
un dispositif de déploiement de coussin d'air (30) présentant une extrémité ouverte alignée avec la surface de réaction séparée (80);
dans lequel la surface de réaction séparée (80) est configurée de manière à recevoir une force en provenance d'un coussin d'air qui se gonfle de telle sorte que le panneau de garnissage (60) se déplace dans la position déployée qui permet au coussin d'air qui se gonfle de s'expanser vers l'extérieur dans l'habitacle, **caractérisé en ce que** le panneau de garnissage est un panneau de garnissage uniforme (60) qui s'étend latéralement entre un côté conducteur et un côté passager de l'habitacle.

2. Système de retenue gonflable (10) selon la revendication 1, dans lequel le panneau de garnissage uniforme (60) comprend un élément d'une seule pièce moulé intégralement.

3. Système de retenue gonflable (10) selon la revendication 2, dans lequel la première surface est une surface extérieure et la seconde surface est une surface intérieure.

4. Système de retenue gonflable (10) selon la revendication 3, dans lequel une enveloppe est enroulée autour de la surface extérieure du panneau de garnissage uniforme (60) pour former une surface qui est visible dans l'habitacle.

5. Système de retenue gonflable (10) selon la revendication 4, dans lequel une couche rembourrée est disposée entre le panneau de garnissage uniforme (60) et l'enveloppe.

6. Système de retenue gonflable (10) selon la revendication 2, dans laquelle le panneau de garnissage uniforme (60) est fabriqué à partir de polycarbonate.

7. Système de retenue gonflable (10) selon la revendication 1, dans lequel la structure de support est une structure de tableau de bord, et le panneau de garnissage uniforme (60) est un recouvrement de tableau de bord déployable.

8. Système de retenue gonflable selon la revendication 7, dans lequel le recouvrement de tableau de bord déployable peut pivoter autour d'un point de charnière qui est situé à une partie avant de la structure de tableau de bord.

9. Système de retenue gonflable (10) selon la revendication 1, dans lequel la surface de réaction séparée (80) comprend une bride qui permet de monter la surface de réaction séparée (80) sur la seconde surface.

10. Système de retenue gonflable (10) selon la revendication 9, dans lequel la surface de réaction séparée (80) est couplée à la seconde surface par soudage par vibration.

11. Système de retenue gonflable (10) selon la revendication 1, comprenant en outre un élément de fixation détachable pour fixer de façon détachable le panneau de garnissage (60) à la structure de support.

12. Système de retenue gonflable (10) selon la revendication 9, dans lequel l'élément de fixation détachable est placé entre la structure de support et le panneau de garnissage (60).

13. Système de retenue gonflable (10) selon la revendication 9, dans lequel l'élément de fixation détachable est placé entre la structure de support et la surface de réaction séparée (80).

14. Système de retenue gonflable (10) selon la revendication 1, dans lequel la surface de réaction séparée (80) comporte des nervures de support pour augmenter la rigidité de la partie de réaction séparée.

15. Système de retenue gonflable (10) selon la revendication 1, dans lequel la surface de réaction séparée (80) et la seconde surface du panneau de garnissage (60) définissent une cavité.

16. Système de retenue gonflable (10) selon la revendication 15, dans lequel la cavité est remplie avec une matière de remplissage.

17. Système de retenue gonflable (10) selon la revendication 1, dans lequel la surface de réaction séparée (80) est positionnée de manière à recevoir le coussin d'air qui se gonfle à un stade relativement tôt de son déploiement.

18. Système de retenue gonflable (10) selon la revendication 1, dans lequel le panneau de garnissage uniforme (60) présente une épaisseur sensiblement constante.

19. Procédé de fabrication d'un tableau de bord déployable à utiliser avec un système de retenue gonflable (10), le procédé comprenant les étapes consistant à:
former un tableau de bord uniforme qui est configuré de manière à s'étendre latéralement en travers d'un côté conducteur et d'un côté passager d'un habitacle et à se déployer en cas de situation de déploiement de coussin d'air, le tableau de bord étant une couche de substrat d'une seule pièce moulée intégralement présentant une surface intérieure et une surface extérieure; et
monter une surface de réaction séparée (80) sur la surface intérieure du tableau de bord uniforme, la surface de réaction séparée (80) étant configurée de manière à recevoir la force d'un coussin d'air qui se gonfle,
dans lequel la surface de réaction séparée (80) est configurée de manière à distribuer la force d'un coussin d'air qui se gonfle et à permettre le déploiement du tableau de bord uniforme.

20. Procédé selon la revendication 19, comprenant l'étape consistant à enrouler une enveloppe autour de la surface extérieure du tableau de bord uniforme de manière à former une surface exposée.

21. Procédé selon la revendication 20, comprenant en outre l'étape consistant à disposer une couche rembourrée entre la surface extérieure du tableau de bord uniforme et l'enveloppe.
